(19) **Europäisches Patentamt European Patent Office Office européen des brevets**

(11) **EP 1 743 151 B1**

(12) **FASCICULE DE BREVET EUROPEEN**

(45) Date de publication et mention de la délivrance du brevet:
**12.12.2012 Bulletin 2012/50**

(21) Numéro de dépôt: **05769733.6**

(22) Date de dépôt: **03.05.2005**

(51) Int Cl.:
*F16C 19/52* (2006.01)   *F16C 33/58* (2006.01)
*F16C 35/04* (2006.01)   *G01B 7/16* (2006.01)
*G01L 5/00* (2006.01)

(86) Numéro de dépôt international:
**PCT/FR2005/001108**

(87) Numéro de publication internationale:
**WO 2005/121733 (22.12.2005 Gazette 2005/51)**

(54) **ROULEMENT CAPTEUR DE DEFORMATIONS COMPRENANT QUATRE JAUGES DE CONTRAINTES**

DEFORMATIONSMESSLAGER MIT VIER BELASTUNGSMESSGERÄTEN

DEFORMATION-SENSING BEARING COMPRISING FOUR STRESS GAUGES

(84) Etats contractants désignés:
**AT BE BG CH CY CZ DE DK EE ES FI FR GB GR HU IE IS IT LI LT LU MC NL PL PT RO SE SI SK TR**

(30) Priorité: **04.05.2004 FR 0404768**

(43) Date de publication de la demande:
**17.01.2007 Bulletin 2007/03**

(73) Titulaire: **S.N.R. ROULEMENTS**
**74010 Annecy Cédex (FR)**

(72) Inventeurs:
• **DURET, Christophe**
**F-74000 Annecy (FR)**
• **BLANCHIN, Olivier**
**F-74000 Annecy (FR)**

(74) Mandataire: **Novagraaf Technologies**
**122, rue Edouard Vaillant**
**92593 Levallois-Perret Cedex (FR)**

(56) Documents cités:
**EP-A- 1 221 589      DE-A1- 10 041 093**
**US-A- 4 203 319      US-A- 4 705 969**
**US-A1- 2002 062 694      US-A1- 2002 194 927**
**US-A1- 2003 145 651**

**Description**

L'invention concerne un roulement comprenant une bague fixe, une bague tournante et au moins une rangée de corps roulants disposés dans un chemin de roulement qui est formé entre lesdites bagues de sorte à permettre leur rotation relative.

Elle s'applique typiquement à des roulements de roue de véhicule automobile, la bague fixe étant solidaire du châssis dudit véhicule et la roue étant associée à la bague tournante.

Lorsque l'on souhaite connaître les efforts qui s'appliquent à l'interface entre la roue et la chaussée sur laquelle ladite roue tourne, il est connu de mesurer lesdits efforts au niveau du pneu ou au niveau du châssis. Toutefois, la mesure au niveau du pneu pose des problèmes importants de transmission du signal entre le référentiel tournant du pneu et un référentiel fixe de calcul, ledit référentiel tournant devant, en outre, être positionné en permanence par rapport audit référentiel fixe de sorte à pouvoir réaliser les calculs. Concernant la mesure au niveau du châssis, elle est rendue difficile par la répartition des efforts entre les différents organes qui relient la roue audit châssis.

Par conséquent, comme proposé dans les documents FR-2 839 553 et FR-2 812 356, la bague fixe, qui est le premier organe de liaison entre la roue et le châssis, est notamment utilisée en tant que support pour la détermination des efforts qui s'exercent à l'interface entre la roue et la chaussée lors des déplacements du véhicule.

En particulier, la détermination des efforts peut être réalisée par mesure des déformations de la bague fixe qui sont induites par le passage des corps roulants. En effet, l'amplitude de ces déformations est représentative des efforts à déterminer.

L'un des problèmes qui se pose avec une telle stratégie de détermination des efforts est que le signal de déformation dépend de la vitesse de rotation. En particulier, la qualité de la mesure à faible vitesse est insuffisante et la détermination n'est disponible qu'après mesure des déformations induites par le passage d'au moins deux corps roulants successifs.

Par conséquent, ce problème est d'autant plus critique que la mesure d'efforts doit être réalisée en temps réel ou avec un minimum de retard, tel que cela est nécessaire pour les systèmes de contrôle de la dynamique du véhicule comme par exemple l'ABS ou l'ESP.

Dans le document EP 1 221 589 est décrit un roulement comportant une bague fixe, une bague tournante et une rangée de corps roulants disposés dans un chemin de roulement qui est formé entre lesdites bagues de sorte à permettre leur rotation relative, les corps roulants étant équirépartis dans le chemin de roulement avec un écart angulaire donné, le roulement comprenant un système de détermination de l'amplitude des déformations pseudo-sinusoïdales d'une zone de la bague fixe et qui sont induites lors de la rotation. Le système de détermination comprend deux jauges extensométriques distante l'une de l'autre d'un quart de l'écart angulaire des corps roulant, et délivrant chacune un signal fonction de la déformation subie par ladite jauge. Du fait de cette disposition, les signaux délivrés par les deux jauges sont naturellement en déphasage de 90°, et forment l'un un signal sinusoïdal SIN et l'autre un signal cosinusoïdal COS de même angle et de même amplitude, correspondant à l'amplitude des déformations pseudo-sinusoïdales. La connaissance de l'amplitude des variations de ces deux signaux permet alors de déterminer la position de phase des corps roulants par rapport aux jauges.

L'invention vise notamment à remédier à ce problème en proposant un roulement comprenant un système de détermination de l'amplitude des déformations de la bague fixe, ledit système étant agencé pour réaliser une interpolation spatiale du signal de déformation de sorte à avoir, à tout instant et indépendamment de la vitesse de rotation, une mesure des déformations et donc permettre la détermination des efforts.

A cet effet, l'invention propose un roulement selon la revendication 1.

D'autres objets et avantages de l'invention apparaîtront au cours de la description qui suit, faite en référence aux dessins annexés, dans lesquels :

- les figures 1 à 3 sont des vues en perspective de respectivement trois modes de réalisation d'un roulement montrant les jauges de quatre systèmes de détermination de l'amplitude des déformations pseudo sinusoïdales, lesdites jauges étant respectivement disposées sur une zone de la bague fixe ;

- la figure 4 est une représentation fonctionnelle d'un premier mode de réalisation d'un système de détermination selon l'invention ;

- les figures 5 et 6 sont des représentations fonctionnelles d'un deuxième mode de réalisation d'un système de détermination selon l'invention ;

- la figure 7 est une représentation schématique, sur la bague fixe du roulement de la figure 1, d'un positionnement particulier des jauges par rapport à l'écart angulaire entre les corps roulants ;

- la figure 8 est une représentation analogue à la figure 7 montrant les distances entre les jauges et le chemin de roulement.

L'invention concerne un roulement comprenant une bague fixe 1, une bague tournante et au moins une rangée de corps roulants 2 disposés dans un chemin de roulement 3 qui est formé entre lesdites bagues de sorte à permettre la rotation relative desdites bagues.

La bague fixe 1 est destinée à être associée à une structure fixe et la bague tournante est destinée à être associée à un organe tournant. Dans une application particulière le roulement est un roulement de roue de véhicule automobile, la structure fixe étant le châssis dudit véhicule et l'organe tournant étant la roue.

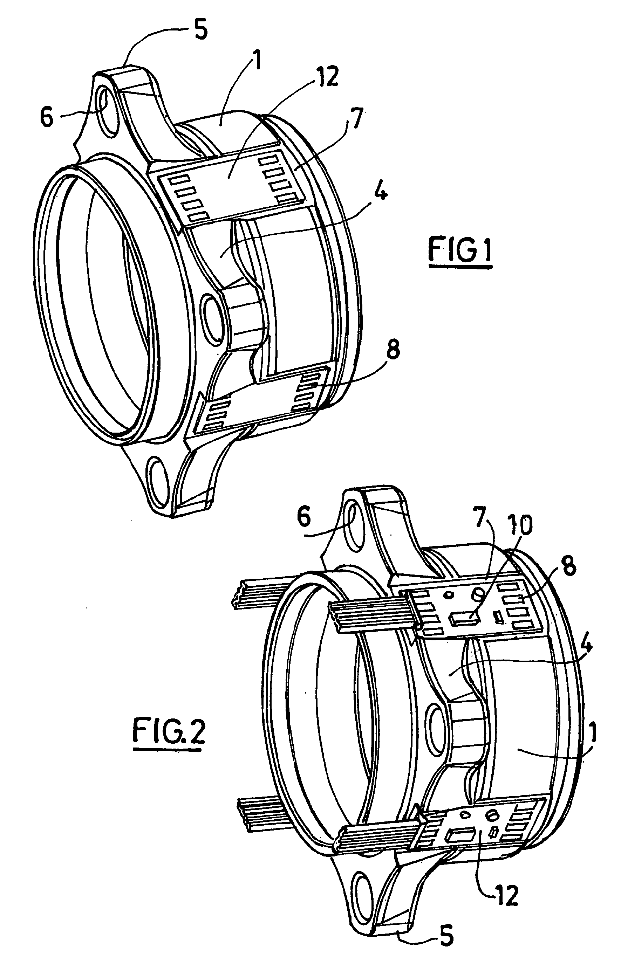

En relation avec les figures 1 à 3, on décrit un tel roulement de roue comprenant deux rangées de billes 2 qui sont disposées coaxialement dans respectivement un chemin de roulement 3 prévu entre la bague extérieure fixe 1 et la bague intérieure tournante. Par ailleurs, la bague fixe 1 est pourvue de moyens de fixation au châssis qui sont formés d'une bride 4 comprenant quatre saillies radiales 5 dans lesquelles un trou axial 6 est réalisé pour permettre la fixation par vissage.

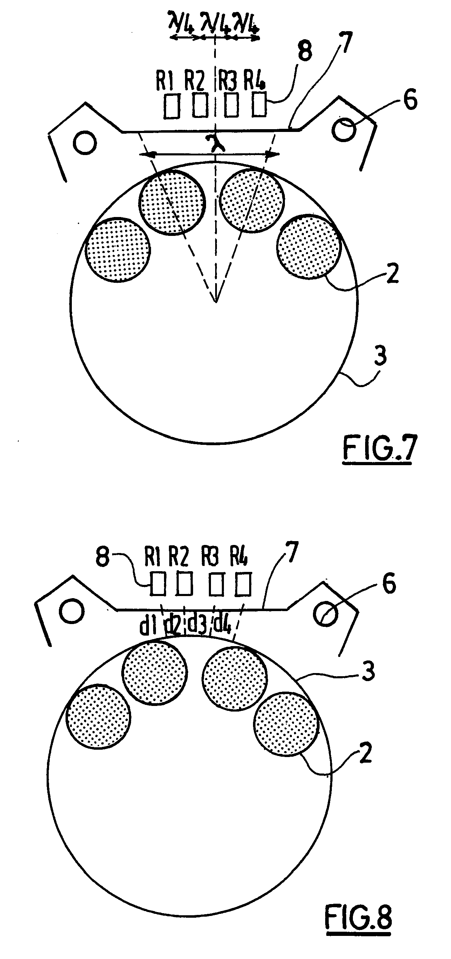

Comme représenté sur les figures 7 et 8, les billes 2 sont équiréparties dans le chemin de roulement 3 avec un écart angulaire $\lambda$ qui est également appelé période spatiale. Selon une réalisation connue, l'écart entre les billes 2 est maintenu en disposant celles-ci dans une cage.

L'invention vise à permettre la détermination de l'amplitude des déformations d'au moins une zone 7 de la bague fixe 1, de sorte à pouvoir en déduire les efforts qui s'appliquent à l'interface entre la roue et la chaussée sur laquelle ladite roue tourne.

En effet, le passage des billes 2 dans le chemin de roulement 3 induit une compression et une relaxation de la bague fixe 1. Ainsi, lors de la rotation, la bague fixe 1 est soumise à une déformation périodique qui peut être approximée par une sinusoïde. Dans la suite de la description, on parlera de déformations pseudo sinusoïdales pour désigner les déformations de la bague fixe 1 lors de la rotation.

La déformation pseudo sinusoïdale est caractérisée par une amplitude qui dépend des charges subies par le roulement et donc des efforts qui s'appliquent à l'interface, et une fréquence qui est proportionnelle à la vitesse de rotation de la bague tournante ainsi qu'au nombre de billes 2.

Bien que la description soit réalisée en relation avec un roulement de roue comprenant deux rangées de billes 2 pour lesquelles on détermine indépendamment l'amplitude des déformations, celle-ci est directement transposable par l'homme du métier à un autre type de roulement et/ou dans une autre application dans laquelle on souhaiterait déterminer l'amplitude des déformations pseudo sinusoïdales d'au moins une zone 7 de la bague fixe 1.

Selon l'invention, le roulement comprend au moins un système de détermination de l'amplitude A des déformations pseudo sinusoïdales d'une zone 7 de la bague fixe 1 qui sont induites lors de la rotation, ledit système comprenant quatre jauges de contraintes 8.

Les jauges 8 sont chacune apte à délivrer un signal fonction de la déformation qu'elle subit. Comme représenté sur les figures 1 à 3, les jauges 8 sont équiréparties sur la zone 7 selon une ligne qui s'étend dans la direction générale de la rotation.

Le système de détermination comprend en outre un dispositif de mesure 9 de quatre signaux $V_i$ qui sont fonction respectivement des variations temporelles du signal émis par chaque jauge 8 lors de la rotation, ledit dispositif étant apte à former, par combinaison des quatre signaux $V_i$, deux signaux respectivement SIN et COS de même angle et de même amplitude, ladite amplitude étant fonction de A.

A partir de ces deux signaux SIN et COS, on est capable, par l'intermédiaire d'un dispositif de calcul 10 formé par exemple d'un processeur, de déduire l'amplitude A en calculant l'expression $SIN^2 + COS^2$.

Ainsi, le calcul de l'amplitude étant réalisé indépendamment de la vitesse de rotation, on s'affranchit notamment des problèmes de retard ou de qualité qui sont inhérents à une détermination temporelle des déformations.

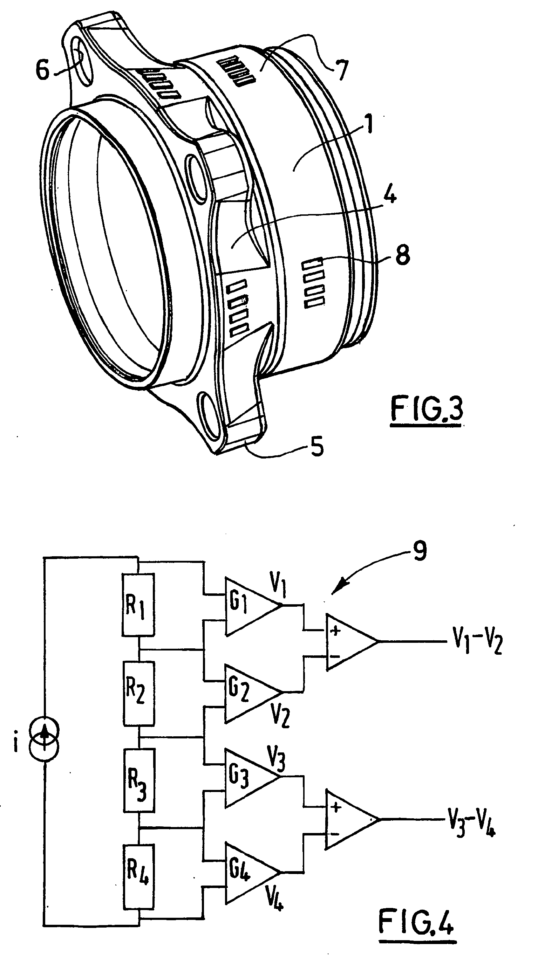

En relation avec les figures 4 à 6, on décrit respectivement un premier et un deuxième modes de réalisation d'un système de détermination selon l'invention, dans lequel les jauges 8 sont à base d'éléments résistifs, notamment piézorésistifs ou magnétostrictifs, de sorte à présenter chacune une résistance électrique $R_i$ qui varie en fonction des déformations subies par ladite jauge 8. En particulier, les jauges 8 peuvent comprendre soit un bloc de plusieurs résistances qui sont combinées pour obtenir une valeur de résistance moyennée qui est représentative de la valeur de la résistance au niveau de la position du bloc, soit une seule résistance.

Selon les deux modes de réalisation représentés, le dispositif de mesure 9 comprend un montage en boucle de courant entre les quatre jauges 8. Le montage comprend en outre quatre amplificateurs différentiels 11 à gains réglables $G_i$. Par ailleurs, le dispositif de mesure 9 peut comprendre en outre un étage de filtrage des signaux non représenté.

Le dispositif de mesure 9 délivre donc en sortie des amplificateurs 11, les signaux :

$$V_1 = G_1 \times (R_{01} + \Delta R_1 \sin(\omega t))i$$

$$V_2 = G_2 \times (R_{02} + \Delta R_2 \sin(\omega t + \varphi))i$$

$$V_3 = G_3 \times (R_{03} + \Delta R_3 \sin(\omega t + 2\varphi))i$$

$$V_4 = G_4 \times (R_{04} + \Delta R_4 \sin(\omega t + 3\varphi))i$$

$R_{oi}$ étant les valeurs au repos des résistances $R_i$, $\Delta R_i$ les variations de résistances des jauges 8, $\omega = 2\pi/T$ (T étant la période temporelle), $\varphi$ le déphasage spatial entre les jauges 8, i le courant dans la boucle.

Le caractère sinusoïdal (par rapport au temps) de la fonction échantillonnée est destiné à simplifier les calculs qui suivent, mais n'est pas limitatif. Cette hypothèse revient à supposer que le roulement tourne à vitesse constante ($\omega$ constante). Selon le mode de réalisation représenté sur la figure 4, le dispositif de mesure 9 comprend en outre un étage d'amplificateurs différentiels 11 agencés pour faire les différences :

$$V_1 - V_2 = [(G_1 R_{01} - G_2 R_{02}) + G_1 \Delta R_1 \sin(\omega t) - G_2 \Delta R_2 \sin(\omega t + \varphi)] \times i \quad \textbf{(1)}$$

$$V_3 - V_4 = [(G_3 R_{03} - G_4 R_{04}) + G_3 \Delta R_3 \sin(\omega t + 2\varphi) - G_4 \Delta R_4 \sin(\omega t + 3\varphi)] \times i \quad \textbf{(2)}$$

En ajustant les gains $G_i$ de sorte que : $G_1 = G_2 = G_3 = G_4 = G$, en fixant les valeurs au repos des résistances de sorte que : $R_{01} = R_{02} = R_{03} = R_{04}$, et en supposant que $\Delta R_1 = \Delta R_2 = \Delta R_3 = \Delta R_4 = \Delta R$, les différences (1) et (2) deviennent :

$$V_1 - V_2 = [G\Delta R[\sin(\omega t) - \sin(\omega t + \varphi)]] \times i \quad \textbf{(3)}$$

$$V_3 - V_4 = [G\Delta R[\sin(\omega t + 2\varphi) - \sin(\omega t + 3\varphi)]] \times i \quad \textbf{(4)}$$

En particulier, l'égalité des $\Delta R_i$ peut être obtenue dans le cas où les jauges 8 sont équidistantes du chemin de roulement.

Dans le cas particulier où $\varphi = \pi/2$, c'est-à-dire lorsque les jauges 8 sont espacées d'une distance égale à $\lambda/4$, les différences (3) et (4) s'écrivent :

$$V_1 - V_2 = \left\lfloor \sqrt{2} G\Delta R \cos(\omega t + \pi/4) \right\rfloor \times i$$

$$V_3 - V_4 = \left\lfloor \sqrt{2} G\Delta R \sin(\omega t + \pi/4) \right\rfloor \times i$$

Par conséquent, dans ce cas particulier, le dispositif de mesure 9 représenté sur la figure 4 permet d'obtenir directement des signaux COS = $V_1 - V_2$ et SIN = $V_3 - V_4$.

Ainsi, en calculant l'expression $SIN^2 + COS^2$ on obtient $\left\lfloor \sqrt{2} G\Delta R \right\rfloor^2 \times i^2$, ce qui permet, en sortie du dispositif de calcul 10, d'obtenir en fonction du temps l'amplitude A qui est fonction de ΔR.

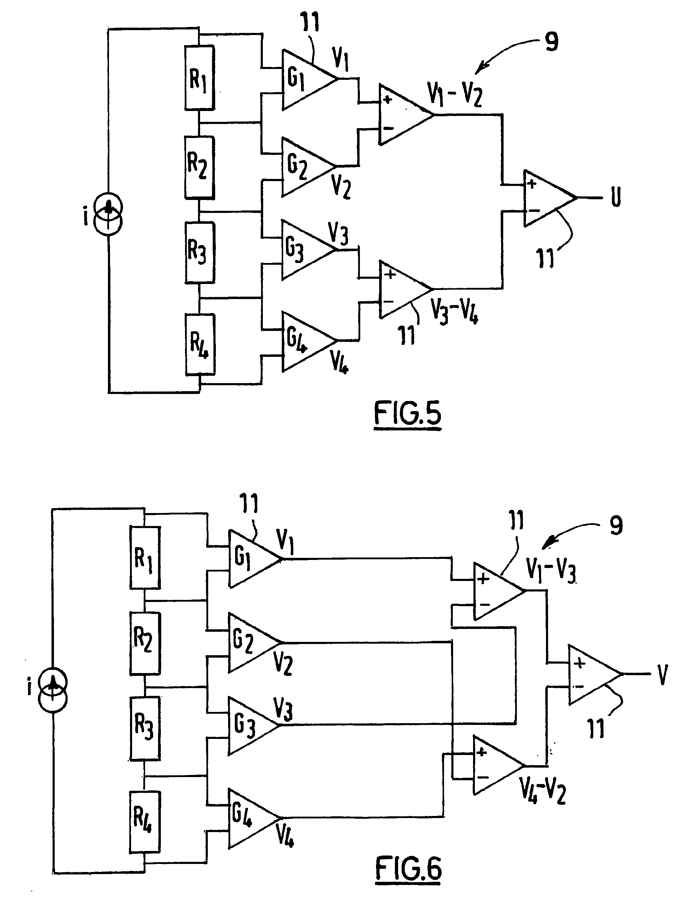

En relation avec les figures 5 et 6, on décrit un dispositif de mesure 9 qui permet d'obtenir des signaux SIN et COS quelle que soit la valeur du déphasage spatial φ entre les jauges 8.

Pour ce faire, le dispositif de mesure 9 comprend deux étages d'amplificateurs différentiels 11, le premier étage étant analogue à celui du premier mode de réalisation de la figure 4, et est donc agencé pour délivrer les signaux $V_1$ - $V_2$ et $V_3$ - $V_4$ selon les relations (3) et (4) mentionnées ci-dessus, mais également de façon analogue les signaux $V_1$ - $V_3$ et $V_4$ - $V_2$ (voir figure 6).

Le deuxième étage comprend deux amplificateurs différentiels 11 représentés respectivement sur les figures 5 et 6 par souci de clarté, de sorte à délivrer les signaux :

$$V = [(V_1 - V_3) - (V_4 - V_2)]$$

Soit à partir des relations (3) et (4) :

$$V = [-4G\Delta R \sin(\varphi) \times \cos(\frac{\varphi}{2}) \times \cos(\omega t + \frac{3\varphi}{2})]i$$

Nous avons donc U = SIN et V = COS, de sorte que, comme exposé ci-dessus, nous pouvons obtenir l'amplitude A qui est fonction de ΔR en calculant l'expression $SIN^2 + COS^2$ dans le dispositif de calcul 10.

Notons que dans le cas où φ est différent de π/2, l'amplitude des signaux U et V est différente. Pour égaliser ces amplitudes, on peut prévoir qu'au moins un amplificateur différentiel 11 du deuxième étage présente un gain ajustable.

En particulier, le gain de l'amplificateur 11 formant le signal U peut être ajusté à $\cos(\frac{\varphi}{2})/\sin(\frac{\varphi}{2})$.

En variante du mode de réalisation représenté sur les figures 5 et 6, le deuxième étage du dispositif de mesure 9 comprend un amplificateur 11 conformément à la figure 5 et un deuxième amplificateur 11 agencé pour délivrer le signal $2(V_2 - V_3)$. Ainsi, les signaux délivrés par le dispositif de mesure 9 sont :

$$U = [(V_1 - V_2) - (V_3 - V_4)] \; ;$$

et

$$V = 2(V_2 - V_3)$$

Cette variante est particulièrement adaptée pour le cas où l'amplitude des signaux $V_i$ ne peut pas être considérée comme identique, c'est-à-dire que les jauges 8 ne détectent pas une sinusoïde de même amplitude A. En supposant une distribution de charge linéaire entre les quatre jauges 8, les signaux $V_i$ s'écrivent :

$$V_1 = (G_1 R_{01} + (A + 3a)\sin(\omega t))i$$

$$V_2 = (G_2 R_{02} + (A + a)\sin(\omega t + \varphi))i$$

$$V_3 = (G_3 R_{03} + (A - a)\sin(\omega t + 2\varphi))i$$

$$V_A = (G_A R_{0A} + (A - 3a)\sin(\omega t + 3\varphi))i$$

a étant la variation linéaire de l'amplitude A à mesurer.

En supposant que $\varphi = \pi/2$ pour simplifier les calculs, bien que la solution selon cette variante soit également applicable à une valeur de $\varphi$ quelconque, on obtient :

$$U = [2\sqrt{2}(-A\sin(\omega t + \frac{3\pi}{4}) + a\sin(\omega t + \frac{\pi}{4}))]i$$

$$V = [-2\sqrt{2}(A\cos(\omega t + \frac{3\pi}{4}) + a\cos(\omega t + \frac{\pi}{4}))]i$$

Nous avons donc U = SIN et V = COS et la racine carrée de l'expression $SIN^2 + COS^2$ est égale à

$$2\sqrt{2}A\sqrt{1 + \frac{a^2}{A^2}} \times i.$$

Par conséquent, un développement limité au premier ordre (a<<A) nous donne $\quad 2\sqrt{2}A \times i \quad$ et donc l'amplitude A qui est celle induite au centre de la zone de répartition des jauges 8.

Sur les figures 7 et 8 sont représentées des jauges 8 qui sont espacées d'une distance égale à $\lambda/4$, lesdites jauges étant par ailleurs disposées sur une zone 7 de déformation sensiblement plane. Comme représenté sur la figure 8, les jauges 8 sont centrées sur ladite zone de sorte à être espacées du chemin de roulement d'une distance respectivement $d_1$, $d_2$, $d_3$, d4, avec $d_1$ = d4 et $d_2$ = $d_3$.

Selon cette implantation particulière des jauges 8, nous pouvons écrire la relation :

$\Delta R_2 = k \Delta R_1$ avec k > 1 car $R_1$ est plus loin du chemin de roulement que $R_2$ et donc le signal issu de la déformation de $R_1$ sera moins important que celui issu de $R_2$.

Et, en raison de la symétrie dans l'implantation des jauges 8 sur la zone 7 de déformation, nous avons :

$$\Delta R_3 = k \, \Delta R_4 = \Delta R_2 = k \, \Delta R_1$$

Par ailleurs, les gains sont ajustés de sorte que $G_1 \Delta R_1 = G_2 \Delta R_2 = G_3 \Delta R_3 = G_4 \Delta R_4$.

Par conséquent, avec la relation précédente, nous avons :

$$G_1 = kG_2 = G_4 = kG_3$$

Dans cette implantation particulière, les valeurs au repos des résistances doivent donc être telles que :

$R_{02} = kR_{01}$ ;
$R_{03} = kR_{04}$; et
$R_{02} = R_{03}$;

Par conséquent, dans l'implantation des jauges 8 selon les figures 7 et 8, les conditions de valeurs de gain et de valeurs au repos des résistances sont définies de sorte à pouvoir obtenir l'amplitude A.

Dans le cas général où les jauges 8 sont implantées sur la périphérie cylindrique de la bague extérieure 1, les distances jauge 8 - chemin de roulement 3 sont toutes égales de sorte que nous avons k = 1. Par conséquent, dans ce cas, les gains sont égaux et les valeurs au repos des résistances doivent l'être aussi.

En relation avec les figures 1 et 2, on décrit l'agencement du roulement représenté dans lequel les jauges 8 sont disposées sur un substrat 12 qui est fixé sur la zone de déformation 7 de la bague fixe 1. Le substrat 12 est rigidement fixé à la bague fixe 1, par exemple par collage ou soudage, de sorte qu'il a également pour fonction de transmettre les déformations entre la bague fixe 1 et les jauges 8.

Bien que les jauges 8 décrites ci-dessus soient à base d'éléments résistifs, d'autres jauges 8, par exemple des capteurs choisis parmi les capteurs à ondes acoustiques de surface et les capteurs de champ magnétique, peuvent être utilisées dans le cadre de l'invention à condition qu'elles délivrent un signal fonction d'une déformation. En particulier, les capteurs de champ magnétique peuvent être basés sur des éléments sensibles de type magnétorésistance, magnétorésistance géante, effet Hall, magnétorésistance à effet tunnel, couches magnétostrictives.

Dans le mode de réalisation représenté, les jauges 8 sont sérigraphiées en couche épaisse sur le substrat 12, par exemple en céramique. En particulier, une technologie de type circuit hybride permet d'intégrer le dispositif de mesure 9 et le dispositif de calcul 10 sur le substrat 12 (voir mode de réalisation de la figure 2). En outre, la sérigraphie permet un bon ajustage de la valeur des résistances ainsi qu'une bonne sensibilité aux déformations, tout en assurant un positionnement précis des résistances sur le substrat 12.

La zone de déformation 7 est usinée de sorte à être sensiblement plane et à s'étendre au dessus des deux rangées de billes 2. Dans cette réalisation, les jauges 8 ne sont pas à équidistance du chemin de roulement 3, de sorte que l'amplitude de la déformation mesurée est fonction de la jauge 8 considérée (voir figures 7 et 8).

Selon le mode de réalisation représenté sur la figure 3, on peut prévoir que les jauges 8 soient fixées directement sur la surface courbe de la bague fixe 1, par exemple les jauges 8 peuvent être de type trames pelliculaires, ce qui permet d'égaliser de construction toutes les distances entre les jauges 8 et le chemin de roulement 3.

Dans la réalisation représentée sur les figures 1 et 2, les jauges 8 de deux systèmes de détermination sont intégrées sur le même substrat 12 de sorte, au voisinage de chaque chemin de roulement 3, qu'au moins un système de détermination soit prévu pour déterminer l'amplitude des déformations de la zone 7.

En particulier, les jauges 8 sont disposées sur la périphérie extérieure de la bague fixe 1, sensiblement en regard de chacun des chemins de roulement 3 de sorte à augmenter l'intensité des signaux à mesurer. Ainsi, le substrat 12 portant les jauges 8 permet de déterminer l'amplitude des déformations induites respectivement par essentiellement une rangée de billes 2, et ce dans un même plan axial.

Le roulement peut comprendre au moins trois (huit dans le mode de réalisation représenté sur la figure 1 : quatre visibles et quatre disposés symétriquement à l'arrière du roulement) systèmes de détermination de l'amplitude des déformations de respectivement une zone 7 de la bague fixe 1, lesdits systèmes étant connectés ou destinés à être connectés à un calculateur apte à calculer, en fonction des amplitudes déterminées, les efforts appliqués lors de la rotation sur la bague fixe 1 et/ou sur un élément solidaire de la bague tournante. En particulier, un tel calculateur est décrit dans le document FR-2 839 553 issu de la demanderesse.

## Revendications

1. Roulement comprenant une bague fixe (1), une bague tournante et au moins une rangée de corps roulants (2) disposés dans un chemin de roulement (3) qui est formé entre lesdites bagues de sorte à permettre leur rotation relative, lesdits corps roulants (2) étant équirépartis dans le chemin de roulement (3) avec un écart angulaire $\lambda$, ledit roulement comprenant au moins un système de détermination de l'amplitude A des déformations pseudo sinusoïdales d'une zone (7) de la bague fixe (1) qui sont induites lors de la rotation, ledit roulement étant **caractérisé en ce que** le système de détermination comprend :

   - quatre jauges de contraintes (8) à base d'éléments résistifs de sorte à présenter chacune une résistance électrique $R_i$ qui varie en fonction des déformations subies par ladite jauge, lesdites jauges étant équiréparties sur ladite zone ;
   - un dispositif de mesure (9) comprenant un montage en boucle de courant entre les quatre jauges (8), de sorte que les quatre jauges (8) sont parcourues par un même courant électrique circulant dans la boucle, ledit montage comprenant quatre amplificateurs différentiels (11) à gain réglable $G_i$ de sorte à former quatre signaux $V_i$ qui sont fonction respectivement des variations temporelles de la résistance électrique $R_i$ de chaque jauge (8) lors de la rotation, ledit dispositif étant apte à former, par combinaison des quatre signaux $V_i$, deux signaux respectivement SIN et COS de même angle et de même amplitude, ladite amplitude étant fonction de A ;
   - un dispositif de calcul (10) de l'amplitude A des déformations de la zone (7) en fonction du temps, ledit dispositif étant agencé pour calculer l'expression $SIN^2 + COS^2$ de sorte à en déduire l'amplitude A.

**2.** Roulement selon la revendication 1, dans lequel chacun des quatre amplificateurs différentiels (11) est branché aux bornes de l'une des jauges (8).

**3.** Roulement selon la revendication 1 ou 2, **caractérisé en ce que** le dispositif de mesure (9) comprend en outre un étage de filtrage des signaux.

**4.** Roulement selon l'une quelconque des revendications précédentes, **caractérisé en ce que** les jauges (8) sont espacées d'une distance égale à $\lambda/4$.

**5.** Roulement selon la revendication 4, **caractérisé en ce que** le dispositif de mesure (9) comprend en outre un étage d'amplificateurs différentiels (11) agencés pour faire les différences $V_1 - V_2 = COS$ et $V_3 - V_4 = SIN$.

**6.** Roulement selon la revendication 3 ou 4, **caractérisé en ce que** le dispositif de mesure (9) comprend en outre deux étages d'amplificateurs différentiels (11), le premier étant agencé pour faire les différences $V_1 - V_2$, $V_3 - V_4$, $V_1 - V_3$, et $V_4 - V2$, le deuxième étant agencé pour faire les différences $[(V_1 - V_2) - (V_3 - V_4)] = SIN$ et $[(V_1 - V_3) - (v_4 - V_2)] = COS$.

**7.** Roulement selon la revendication 3 ou 4, **caractérisé en ce que** le dispositif de mesure (9) comprend en outre deux étages d'amplificateurs différentiels (11), le premier étant agencé pour faire les différences $V_1 - V_2$, $V_3 - V_4$, le deuxième étant agencé pour faire les différences $[(V_1 - V_2) - (V_3 - V_4)] = SIN$ et $2(V_2 - V_3) = COS$.

**8.** Roulement selon la revendication 6 ou 7, **caractérisé en ce qu'**au moins un amplificateur différentiel (11) du deuxième étage présente un gain ajustable.

**9.** Roulement selon l'une quelconque des revendications 2 à 8, **caractérisé en ce que** les jauges (8) présentent des résistances au repos $R_{0i}$ qui sont égales.

**10.** Roulement selon l'une quelconque des revendications 2 à 8, **caractérisé en ce que** la zone (7) de déformation est usinée de sorte à être sensiblement plane, lesdites jauges étant centrées sur ladite zone de sorte à être, deux à deux, à équidistance du chemin de roulement (3), les jauges (8) présentant des résistances au repos $R_{0i}$ telles que $R_{02} = kR_{01}$, $R_{03} = kR_{04}$ et $R_{03} = R_{02}$.

**11.** Roulement selon la revendication 1, **caractérisé en ce que** les jauges (8) sont ou comprennent des capteurs choisis parmi les capteurs à ondes acoustiques de surface et les capteurs magnétiques.

**12.** Roulement selon l'une quelconque des revendications 1 à 11, **caractérisé en ce que** les jauges (8) sont disposées sur un substrat (12) qui est fixé sur la zone (7) de déformation de la bague fixe (1).

**13.** Roulement selon la revendication 12, **caractérisé en ce que** les jauges (8) sont sérigraphiées en couche épaisse sur le substrat (12).

**14.** Roulement selon la revendication 12 ou 13, **caractérisé en ce que** le dispositif de mesure (9) et le dispositif de calcul (10) sont intégrés sur le substrat (12).

**15.** Roulement selon l'une quelconque des revendications 1 à 14, **caractérisé en ce qu'**il comprend au moins trois systèmes de détermination de l'amplitude des déformations de respectivement une zone (7) de la bague fixe (1).

**16.** Roulement selon la revendication 15, **caractérisé en ce que** les systèmes de détermination sont connectés ou destinés à être connectés à un calculateur apte à calculer, en fonction des amplitudes déterminées, les efforts appliqués lors de la rotation sur la bague fixe (1) et/ou sur un élément solidaire de la bague tournante.

**17.** Roulement selon l'une quelconque des revendications 1 à 16, **caractérisé en ce que** les jauges (8) sont disposées sur la zone (7) selon une ligne qui s'étend dans la direction générale de la rotation.

**18.** Roulement selon l'une quelconque des revendications 1 à 17, **caractérisé en ce que** les jauges (8) sont disposées au voisinage d'un chemin de roulement (3).

**19.** Roulement selon la revendication 18, **caractérisé en ce que** les jauges (8) sont disposées sur la périphérie extérieure de la bague fixe (1), sensiblement en regard du chemin de roulement (3).

20. Roulement selon la revendication 18 ou 19, **caractérisé en ce qu'**il comprend deux rangées de corps roulants (2) disposés dans respectivement un chemin de roulement (3), dans lequel, au voisinage de chaque chemin de roulement (3), au moins un système de détermination est prévu pour déterminer l'amplitude des déformations d'une zone (7).

**Claims**

1. Bearing comprising a fixed ring (1), a rotating ring and at least one row of rolling bodies (2) arranged in a rolling track (3) that is formed between said rings so as to enable relative rotation thereof, said rolling bodies (2) being equally distributed in the rolling track (3) with an angular separation $\lambda$, said bearing comprising at least one system for determining the amplitude A of the pseudo-sinusoidal deformations of an area (7) of the fixed ring (1) that are caused during rotation, said bearing being **characterised in that** the determination system comprises:

   - four stress gauges (8) based on resistive elements so as each to have an electrical resistance $R_i$ that varies according to the deformations suffered by said gauge, said gauges being equally distributed over said area;
   - a measuring device (9) comprising a current loop circuit between the four gauges (8) so that the four gauges (8) have running through them the same electric current that flows in the loop, said circuit comprising four differential amplifiers (11) with adjustable gain $G_i$ so as to form four signals $V_i$ that depend respectively on the temporal variations in the electrical resistance $R_i$ of each gauge (8) during rotation, said device being able to form, by combination of the four signals $V_i$, two signals respectively SIN and COS with the same angle and same amplitude, said amplitude being dependent on A;
   - a device (10) for calculating the amplitude A of the deformations of the area (7) as a function of time, said device being arranged to calculate the expression $SIN^2 + COS^2$ so as to derive therefrom the amplitude A.

2. Bearing according to claim 1, in which each of the four differential amplifiers (11) is connected to the terminals of one of the gauges (8).

3. Bearing according to claim 1 or 2, **characterised in that** the measuring device (9) also comprises a signal filtering stage.

4. Bearing according to any one of the preceding claims, **characterised in that** the gauges (8) are spaced apart by a distance equal to $\lambda/4$.

5. Bearing according to claim 4, **characterised in that** the measuring device (9) also comprises a differential amplifier stage (11) arranged to make the differences $V_1 - V_2 = COS$ and $V_3 - V_4 = SIN$.

6. Bearing according to claim 3 or 4, **characterised in that** the measuring device (9) also comprises two differential amplifier stages (11), the first being arranged to make the differences $V_1 - V_2$, $V_3 - V_4$, $V_1 - V_3$ and $V_4 - V_2$, the second being arranged to make the differences $[(V_1 - V_2) - (V_3 - V_4)] = SIN$ and $(V_1 - V_3) - (V_4 - V2)] = COS$.

7. Bearing according to claim 3 or 4, **characterised in that** the measuring device (9) also comprises two differential amplifier stages (11), the first being arranged to make the differences $V_1 - V_2$, $V_3 - V_4$, the second being arranged to make the differences $[(V_1 - V_2) - (V_3 - V_4)] - SIN$ and $2(V_2 - V_3) - COS$.

8. Bearing according to claim 6 or 7, **characterised in that** at least one differential amplifier (11) of the second stage has an adjustable gain.

9. Bearing according to any one of claims 2 to 8, **characterised in that** the gauges (8) have resistances at rest $R_{0i}$ that are equal.

10. Bearing according to any one of claims 2 to 8, **characterised in that** the deformation area (7) is manufactured so that it is substantially flat, said gauges being centered on said area so as to be, in pairs, at equal distances from the rolling track (3), the gauges (8) having resistances at rest $R_{0i}$ such that $R_{02} = kR_{0i}$, $R_{03} = kR_{04}$ and $R_{03} = R_{02}$.

11. Bearing according to claim 1, **characterised in that** the gauges (8) are or comprise sensors chosen from surface acoustic wave sensors and magnetic sensors.

**12.** Bearing according to any one of claims 1 to 11, **characterised in that** the gauges (8) are placed on a substrate (12) that is fixed to the deformation area (7) of the fixed ring (1).

**13.** Bearing according to claim 12, **characterised in that** the gauges (8) are screen printed in a thick layer on the substrate (12).

**14.** Bearing according to claim 12 or 13, **characterised in that** the measuring device (9) and the computing device (10) are integrated on the substrate (12).

**15.** Bearing according to any one of claims 1 to 14, **characterised in that** it comprises at least three systems for determining the amplitude of the deformations of respectively an area (7) of the fixed ring (1).

**16.** Bearing according to claim 15, **characterised in that** the determination systems are connected or are intended to be connected to a computer able to calculate, according to the amplitudes determined, the forces applied during the rotation on the fixed raceway (1) and/or on an element secured to the rotating ring.

**17.** Bearing according to any one of claims 1 to 16, **characterised in that** the gauges (8) are placed on the area (7) on a line that extends in the general direction of the rotation.

**18.** Bearing according to any one of claims 1 to 17, **characterised in that** the gauges (8) are arranged in the vicinity of a rolling track (3).

**19.** Bearing according to claim 18, **characterised in that** the gauges (8) are arranged on the external periphery of the fixed ring (1), substantially opposite the rolling track (3).

**20.** Bearing according to claim 18 or 19, **characterised in that** it comprises two rows of rolling bodies (2) arranged in respectively a rolling track (3), in which, in the vicinity of each rolling track (3), at least one determination system is provided for determining the amplitude of the deformations of an area (7).

**Patentansprüche**

**1.** Lager, umfassend einen festen Laufring (1), einen rotierenden Laufring und mindestens eine Reihe von Laufkörpern (2), die auf einer Laufbahn (3) angeordnet sind, die derart zwischen den Laufringen gebildet ist, dass sie eine relative Drehung derselben ermöglicht, wobei die Laufkörper (2) auf der Laufbahn (3) in einem Winkelabstand λ gleichmäßig verteilt sind, wobei das Lager mindestens ein System zum Bestimmen der Amplitude A der pseudosinusförmigen Verformungen einer Zone (7) des festen Laufrings (1) umfasst, die bei der Drehung eingeleitet werden, wobei das Lager **dadurch gekennzeichnet ist, dass** das Bestimmungssystem Folgendes umfasst:

- vier Dehnungsmessstreifen (8), die auf resistiven Elementen basieren, um jeweils einen elektrischen Widerstand $R_i$ aufzuweisen, der in Abhängigkeit von den Verformungen variiert, die der Messstreifen erfährt, wobei die Messstreifen auf der Zone gleichmäßig verteilt sind;
- eine Messvorrichtung (9), die eine Stromschleifenschaltung zwischen den vier Messstreifen (8) umfasst, so dass der gleiche elektrische Strom, der in der Schleife umläuft, durch die vier Messstreifen (8) fließt, wobei die Schaltung vier Differenzverstärker (11) mit regelbarer Verstärkung $G_i$ umfasst, um vier Signale $V_i$ zu bilden, die jeweils von den zeitlichen Variationen des elektrischen Widerstandes $R_i$ jedes Messstreifens (8) bei der Drehung abhängen, wobei die Vorrichtung dazu geeignet ist, um durch eine Kombination der vier Signale $V_i$ zwei Signale, jeweils SIN und COS, mit dem gleich Winkel und der gleichen Amplitude zu bilden, wobei die Amplitude eine Funktion von A ist;
- eine Vorrichtung (10) zum Berechnen der Amplitude A der Verformungen der Zone (7) in Abhängigkeit von der Zeit, wobei die Vorrichtung angeordnet ist, um den Ausdruck $SIN^2 + COS^2$ zu berechnen, um daraus die Amplitude A abzuleiten.

**2.** Lager nach Anspruch 1, wobei jeder der vier Differenzverstärker (11) an die Klemmen eines der Messstreifen (8) angeschlossen ist.

**3.** Lager nach Anspruch 1 oder 2, **dadurch gekennzeichnet, dass** die Messvorrichtung (9) ferner eine Signalfilterstufe umfasst.

4. Lager nach einem der vorhergehenden Ansprüche, **dadurch gekennzeichnet, dass** die Messstreifen (8) in einem Abstand gleich $\lambda/4$ beabstandet sind.

5. Lager nach Anspruch 4, **dadurch gekennzeichnet, dass** die Messvorrichtung (9) ferner eine Stufe (11) von Differenzverstärkern (11) umfasst, die angeordnet sind, um die Differenzen $V_1 - V_2 = COS$ und $V_3 - V_4 = SIN$ zu bilden.

6. Lager nach Anspruch 3 oder 4, **dadurch gekennzeichnet, dass** die Messvorrichtung (9) ferner zwei Stufen von Differenzverstärkern (11) umfasst, wobei der erste angeordnet ist, um die Differenzen $V_1 - V_2$, $V_3 - V_4$, $V_1 - V_3$ und $V_4 - V_2$ zu bilden, wobei der zweite angeordnet ist, um die Differenzen $[ (V_1 - V_2) - (V_3 - V_4) ] = SIN$ und $[ (V_1 - V_3) - (V_4 - V_2) ] = COS$ zu bilden.

7. Lager nach Anspruch 3 oder 4, **dadurch gekennzeichnet, dass** die Messvorrichtung (9) ferner zwei Stufen von Differenzverstärkern (11) umfasst, wobei der erste angeordnet ist, um die Differenzen $V_1 - V_2$, $V_3 - V_4$ zu bilden und der zweite angeordnet ist, um die Differenzen $[(V_1 - V_2) - (V_3 - V_4)] = SIN$ und $2 (V_2 - V_3) = COS$ zu bilden.

8. Lager nach Anspruch 6 oder 7, **dadurch gekennzeichnet, dass** mindestens ein Differenzverstärker (11) der zweiten Stufe eine einstellbare Verstärkung aufweist.

9. Lager nach einem der Ansprüche 2 bis 8, **dadurch gekennzeichnet, dass** die Messstreifen (8) Ruhewiderstände $R_{0i}$ aufweisen, die gleich sind.

10. Lager nach einem der Ansprüche 2 bis 8, **dadurch gekennzeichnet, dass** die Verformungszone (7) derart bearbeitet ist, dass sie im Wesentlichen eben ist, wobei die Messstreifen auf die Zone zentriert sind, so dass sie paarweise im gleichen Abstand von der Laufbahn (3) vorliegen, wobei die Messstreifen (8) Ruhewiderstände $R_{0i}$, wie etwa $R_{02} = kR_{01}$, $R_{03} = kR_{04}$ und $R_{03} = R_{02}$, aufweisen.

11. Lager nach Anspruch 1, **dadurch gekennzeichnet, dass** die Messstreifen (8) Sensoren sind bzw. umfassen, die aus akustischen Oberflächenwellen-Sensoren und Magnetsensoren gewählt werden.

12. Lager nach einem der Ansprüche 1 bis 11, **dadurch gekennzeichnet, dass** die Messstreifen (8) auf einem Substrat (12) angeordnet sind, das an der Verformungszone (7) des festen Laufrings (1) befestigt ist.

13. Lager nach Anspruch 12, **dadurch gekennzeichnet, dass** die Messstreifen (8) auf das Substrat (12) in Dickschicht siebgedruckt sind.

14. Lager nach Anspruch 12 oder 13, **dadurch gekennzeichnet, dass** die Messvorrichtung (9) und die Rechenvorrichtung (10) auf dem Substrat (12) integriert sind.

15. Lager nach einem der Ansprüche 1 bis 14, **dadurch gekennzeichnet, dass** es mindestens drei Systeme zum Bestimmen der Amplitude der Verformungen jeweils einer Zone (7) des festen Laufrings (1) umfasst.

16. Lager nach Anspruch 15, **dadurch gekennzeichnet, dass** die Bestimmungssysteme an einen Rechner angeschlossen sind oder dazu gedacht sind, um an diesen angeschlossen zu werden, der in der Lage ist, in Abhängigkeit von den bestimmten Amplituden die Kräfte zu berechnen, die bei der Drehung auf den festen Laufring (1) und/oder auf ein Element, das mit dem rotierenden Ring fest verbunden ist, ausgeübt werden.

17. Lager nach einem der Ansprüche 1 bis 16, **dadurch gekennzeichnet, dass** die Messstreifen (8) in der Zone (7) an einer Linie entlang, die sich in der allgemeinen Drehrichtung erstreckt, angeordnet sind.

18. Lager nach einem der Ansprüche 1 bis 17, **dadurch gekennzeichnet, dass** die Messstreifen (8) in der Nähe einer Laufbahn (3) angeordnet sind.

19. Lager nach Anspruch 18, **dadurch gekennzeichnet, dass** die Messstreifen (8) auf dem äußeren Umfang des festen Laufrings (1), im Wesentlichen gegenüber der Laufbahn (3), angeordnet sind.

20. Lager nach Anspruch 18 oder 19, **dadurch gekennzeichnet, dass** es zwei Reihen von Laufkörpern (2) umfasst, die auf jeweils einer Laufbahn (3) angeordnet sind, wobei in der Nähe jeder Laufbahn (3) mindestens ein Bestimmungssystem bereitgestellt wird, um die Amplitude der Verformungen einer Zone (7) zu bestimmen.

FIG 1

FIG.2

FIG.3

FIG.4

**FIG.5**

**FIG.6**

$^{\lambda}\!/_{4}$ $^{\lambda}\!/_{4}$ $^{\lambda}\!/_{4}$

8 7

R1 R2 R3 R4 6

$\lambda$

2

3

FIG.7

8 R1 R2 R3 R4 7

6

d1 d2 d3 d4

3

2

FIG.8

## RÉFÉRENCES CITÉES DANS LA DESCRIPTION

**Documents brevets cités dans la description**

- FR 2839553
- FR 2812356
- EP 1221589 A